# EUROPÄISCHE PATENTSCHRIFT

(11) **EP 4 304 895 B1**
(45) Veröffentlichungstag und Bekanntmachung des Hinweises auf die Patenterteilung: **12.11.2025**
(21) Anmeldenummer: 22761151.4
(22) Anmeldetag: 03.08.2022
(51) Int. Cl.: B60N 2/30, B60R 22/48, B60N 2/06, B60R 21/015, H01Q 1/32, B60N 2/02, B60R 21/01

(54) **SITZÜBERWACHUNGSSYSTEM SOWIE VERFAHREN ZUR POSITIONSBESTIMMUNG**
SEAT MONITORING SYSTEM AND METHOD FOR POSITION DETERMINATION
SYSTÈME DE SURVEILLANCE DE SIÈGE ET PROCÉDÉ POUR DÉTERMINATION DE POSITION

(30) Priorität: 12.10.2021 DE 102021126382
(43) Veröffentlichungstag der Anmeldung: 17.01.2024
(73) Patentinhaber: Marquardt GmbH, 78604 Rietheim-Weilheim (DE)
(72) Erfinder: FISCHER, Joerg, 78166 Donaueschingen (DE); HOERR, Daniel, Oxford, Michigan 48371 (US); BACLE, Antoine, 79180 Chauray (FR); STEHLE, Wolfgang, 78603 Renquishausen (DE)
(74) Vertreter: Staeger & Sperling Partnerschaftsgesellschaft mbB
(86) Internationale Anmeldenummer: PCT/EP2022/071851
(87) Internationale Veröffentlichungsnummer: WO 2023/061636

(56) Entgegenhaltungen:
- DE-A1- 102020 107 845
- DE-A1- 102021 102 155
- US-B1- 9 491 581

## Beschreibung

Die Erfindung betrifft Sitzüberwachungssystem zur Überwachung eines Zustands zumindest eines in einem Innenraum eines Fahrzeug anordenbaren Sitzes und Positionsbestimmung des Sitzes in dem Innenraum sowie ein Verfahren zur Positionsbestimmung, wobei das Sitzüberwachungssystem insbesondere dadurch gekennzeichnet ist, das zur Überwachung und Positionsbestimmung fahrzeugseitig und Sitzseitig jeweils genau zwei Antennen verwendet werden.

Aus dem Stand der Technik ist eine Vielzahl von verschiedenen System zur Sitzüberwachung bekannt.

Grundsätzlich ist davon auszugehen, dass die Sitze in einem Fahrzeug immer öfter flexibel angeordnet werden sollen, um verschiedenste und an spezielle Aufgaben angepasste Fahrzeuginnenräume bereitstellen zu können.

Rein beispielhaft sollen für einen Warentransport alle Sitze aus einem Fahrzeug ausgebaut, für einen Personentransport alle Sitze oder zumindest einige Sitze in dem Fahrzeug eingebaut und vorhandene Sitze situationsabhängig unterschiedlich, z. B. gedreht, angeordnet werden können.

Das führt jedoch zu neuen Einschränkungen hinsichtlich der Kabelführung in dem Fahrzeug, da für eine kabelgebundene Zustandsüberwachung und Positionserfassung an jedem möglichen Punkt im Fahrzeug, an welchem ein Sitz anordenbar sein soll, eine Schnittstelle bereitgestellt werden müsste.

Das gilt auch insbesondere hinsichtlich der Zustandsüberwachung der zu den Sitzen gehörenden Gurte, deren Status (offen/geschlossen) zusammen mit einer Sitzbelegung in modernen Fahrzeugen zwingend abgefragt werden müssen.

Hierfür werden im Stand der Technik verschiedenste drahtlose Sitzüberwachungssysteme vorgeschlagen. Beispielsweise ist aus der DE 10 2008 031 494 B4 ein Sitzüberwachungssystem bekannt, welches aus einer einzelnen Signalstärke einen Abstand eines Senders zum Empfänger bestimmt und durch Abgleich des ermittelten Abstands mit den Abständen zwischen dem Sender und mehreren vorbestimmter Bereichen, in welchem ein Sitz anordenbar ist, bestimmt, in welchem der vorbestimmten Bereiche der Sitz angeordnet ist.

Weiter wird durch die DE 11 2017 005 187 T5 ein Sitzüberwachungssystem vorgeschlagen, welches ausgebildet ist, eine Position des Sitzes dadurch zu bestimmen, dass die Abstände des Sitzes zu genau drei Sendern (Antennen) bestimmt werden.

Neben der Positionsbestimmung ist jeweils auch vorgesehen, dass die Sitze bzw. an den Sitzen vorgesehene Sitzmodule Zustandswerte, wie beispielsweise ein Status des Gurtes, ob dieser also geschlossen oder offen ist, an ein in dem Fahrzeug vorgesehenes Steuermodul übermitteln. Hierfür ist jedoch in bzw. an den Sitzen ein Sensormodul erforderlich, welches diese Zustandswerte erfasst.

Weitere Sitzüberwachungssysteme sowie Aspekte solcher Systeme sind zudem aus den Schriften DE 10 2020 107845 A1, DE 10 2021 102155 A1 und US 9 491 581 B1 bekannt. Die DE102020107845 zeigt dabei ein Sitzüberwachungssystem zur Positionsbestimmung eines Sitzes in einem Fahrzeuginnenraum, wobei das Sitzüberwachungssystem ein Steuermodul und drei mit dem Steuermodul signaltechnisch verbundene Sendemodule aufweist.

Der Erfindung liegt die Aufgabe zugrunde, ein alternatives System zur Sitzüberwachung bereitzustellen, welches eine weitere Möglichkeit zur Positionsbestimmung des Sitzes im Fahrzeug bereitstellt.

Diese Aufgabe wird durch die Merkmalskombination gemäß Patentanspruch 1 gelöst.

Erfindungsgemäß wird daher ein Sitzüberwachungssystem zur Überwachung eines Zustands zumindest eines in einem Innenraum eines Fahrzeug anordenbaren Sitzes und Positionsbestimmung des Sitzes in dem Innenraum vorgeschlagen. Dabei kann das Sitzüberwachungssystem beispielsweise ausschließlich im Fond eines Fahrzeugs oder aber auch im gesamten Innenraum vorgesehen sein. Meist ist es jedoch ausreichend nur das Fond des Fahrzeugs zu überwachen, da die Sitze im vorderen Bereich des Innenraums, also insbesondere der Fahrer und Beifahrersitz meist nicht aus dem Fahrzeug entfernt werden sollen und oftmals fest verankert sind. Das Sitzüberwachungssystem weist ein Steuermodul, genau zwei mit dem Steuermodul signaltechnisch verbundene Sendemodule sowie zumindest ein Sitzmodul auf. Das zumindest eine Sitzmodul ist jeweils zumindest einem Sitz zugeordnet, wobei auch beispielsweise zwei oder mehr Sitze zu einer Einheit verbunden sein können, sodass das Sitzmodul hierbei der Einheit von Sitzen zugeordnet sein kann. Das zumindest eine Sitzmodul bzw. jedes Sitzmodul weist ein Empfangsmodul und insbesondere genau ein Empfangsmodul auf. Weiter zeichnet sich die Erfindung dadurch aus, dass die genau zwei Sendemodule beabstandet zueinander angeordnet sind und jeweils genau eine Antenne aufweisen. Weiter weist das Empfangsmodul genau zwei Antennen auf, wobei eine erste Antenne der genau zwei Antennen des Empfangsmoduls ausgebildet ist, ein Signal von einem ersten Sendemodul der genau zwei Sendemodule bzw. der genau einen Antenne des ersten Sendemoduls zu empfangen, und wobei eine zweite Antenne der genau zwei Antennen des Empfangsmoduls ausgebildet ist, ein Signal von einem zweiten Sendemodul der genau zwei Sendemodule bzw. der genau einen Antenne des zweiten Sendemoduls zu empfangen. Zudem ist das Empfangsmodul ausgebildet, Signalstärken (RSSI) der von den Antennen des Empfangsmoduls empfangenen Signale, d.h. eine erste Signalstärke des von der ersten Antenne des Empfangsmoduls von der Antenne des ersten Sendemoduls empfangen Signals und eine zweite Signalstärke des von der zweiten Antenne des Empfangsmoduls von der Antenne des zweiten Sendemoduls empfangen Signals, zur Positionsbestimmung zu bestimmen.

Vorzugsweise ist die erste Antenne des Empfangsmoduls beispielsweise durch eine entsprechende Ausrichtung und/oder Signalfilter ausgebildet, ausschließlich das Signal der Antenne des ersten Sendemoduls zu empfangen und/oder auszuwerten.

Ebenso gilt vorzugsweise, dass die zweite Antenne des Empfangsmoduls beispielsweise durch eine entsprechende Ausrichtung und/oder Signalfilter ausgebildet ist, ausschließlich das Signal der Antenne des zweiten Sendemoduls zu empfangen und/oder auszuwerten.

Gemäß einer vorteilhaften Weiterbildung ist zudem vorgesehen, dass das Empfangsmodul signaltechnisch mit dem Steuermodul verbunden und ausgebildet ist, Daten an das Steuermodul zu senden. Das Empfangsmodul kann dabei auch ausgebildet sein, eine digitale Information und/oder digitale Daten und weiter insbesondere die Information ob das Sitzmodul im Innenraum bzw. soweit ein Bereich in dem Innenraum bestimmt ist, in welchem die Sitze angeordnet sein können, ob das Sitzmodul in dem Bereich angeordnet ist, an das Steuermodul zu senden. Ob das Sitzmodul im Innenraum bzw. in dem Bereich angeordnet ist, kann beispielsweise bereits dadurch bestimmt werden, dass das Empfangsmodul jeweils ein Signal von beiden Sendemodulen empfangen hat. Wird beispielsweise ein Signal von nur einem der Empfangsmodule empfangen, kann die Information, dass das Sitzmodul nicht innerhalb des Fahrzeugs bzw. des Bereichs angeordnet ist an das Steuermodul gesendet werden.

Die signaltechnische Verbindung kann beispielsweise durch eine bidirektionale Funkverbindung über die Antennen des Empfangsmoduls und die jeweilige Antenne der Sendemodule hergestellt werden. Auch ist möglich, dass nur eine Funkverbindung zwischen genau einer Antenne des Empfangsmoduls und genau einem Sendemodul bidirektional und die andere Funkverbindung unidirektional ist.

Alternativ können auch weitere, nicht zur Positionsbestimmung verwendete Antennen vorgesehen sein. Beispielsweise können die genau zwei Antennen des Empfangsmoduls als NF-Antennen und eine zusätzliche Antenne des Sitzmoduls, welche auch außerhalb des Empfangsmoduls vorgesehen sein kann, eine HF-Antenne sein. Hierbei sind dann die Antennen der Sendemodule ebenfalls als NF-Antennen und eine zusätzliche signaltechnisch mit dem Steuermodul verbundene Antenne als HF-Antenne ausgebildet. Da weder die zusätzliche Antenne des Sitzmoduls noch die zusätzliche mit dem Steuermodul verbundene Antenne für die Positionsbestimmung verwendet wird, ist deren Anordnung im Fahrzeug beliebig und unabhängig von den anderen Antennen.

Die Sendemodule und falls vorhanden eine zusätzliche Antenne sind vorzugsweise kabel- bzw. drahtgebunden signaltechnisch mit dem Steuermodul verbunden.

Grundsätzlich kann bei dem vorgeschlagenen Sitzüberwachungssystem dahingehend unterschieden werden, dass das Steuermodul und die Sendemodule an einer festen unveränderlichen Position im Fahrzeug fixiert sein können und somit dem Fahrzeug zugeordnet sind und dass das Sitzmodul dem zumindest einem Sitz zugeordnet ist und mit dem Sitz in dem Fahrzeug angeordnet oder aus dem Fahrzeug entfernt werden kann.

Gemäß einer vorteilhaften Weiterbildung des Sitzüberwachungssystems ist das Empfangsmodul ausgebildet, die Signalstärken der von den Antennen des Empfangsmoduls empfangenen Signale zur Positionsbestimmung an das Steuermodul zu übertragen. Alternativ oder zusätzlich hierzu ist das Empfangsmodul ausgebildet, eine Position des Sitzes im Innenraum des Fahrzeugs an das Steuermodul zu übertragen. Dabei kann dann die Position durch das Sitzmodul aus den Signalstärken der von den Antennen des Empfangsmoduls empfangenen Signale bestimmt werden. Alternativ oder zusätzlich ist das Empfangsmodul ausgebildet, ein Zustandswerte enthaltendes insbesondere digitales Signal an das Steuermodul übertragen.

Als Zustandswerte werden insbesondere ein als Gurtwert bezeichenbarer Zustandswert des Gurtes (Gurt geschlossen/offen), ein Belegungswert (Sitz besetzt, Sitz nicht besetzt, Sitz mit Kindersitz besetzt), ein Belastungswert (auf eine Sitzfläche des Sitzes wirkende Kraft), ein Neigungswert (Neigung der Sitzfläche und/oder der Rückenlehne des Sitzes), ein Kopfstützenwert (Kopfstütze vorhanden, nicht vorhanden) und weitere den Sitz betreffende Werte verstanden. Dabei ist zu beachten, dass ein Sitzmodul auch mehreren Sitzen zugeordnet sein kann und entsprechend mehrere gleichartige Zustandswerte erfasst und/oder übermittelt werden können.

Beispielsweise zur Ermittlung eines solchen Zustandswertes, mehrerer solcher Zustandswerte oder auch zur Ermittlung gleichartiger Zustandswerte mehrerer Sitze kann vorgesehen sein, dass das zumindest eine Sitzmodul ein Sensormodul aufweist, welches ausgebildet ist, Zustandswerte des zumindest einen Sitzes, welchem das Sitzmodul zugeordnet ist, zu ermitteln.

Weiter kann vorgesehen sein, dass die Antennen der genau zwei Sendemodule und/oder die genau zwei Antennen des Empfangsmoduls unidirektionale d.h. Daten nur in eine Richtung übertragende Antennen sind. Zusätzlich oder alternativ dazu kann vorgesehen sein, dass die Antennen der genau zwei Sendemodule und/oder die genau zwei Antennen des Empfangsmoduls eindimensional sendende und/oder empfangende Antennen sind, wobei vorliegend unter eindimensional verstanden wird, dass die Antennen ausgebildet sind Signale im Wesentlichen nur in eine Richtung im Raum auszusenden bzw. zu empfangen.

Gemäß einer weiteren möglichen Variante des Sitzüberwachungssystems ist der zumindest eine Sitz in einem vorbestimmten und insbesondere rechteckigen Bereich in dem Innenraum des Fahrzeugs anordenbar und die jeweilige Position der genau zwei Sendemodule relativ zu dem Bereich bekannt und in Relation zu dem Bereich unveränderlich. Durch die Bestimmung der Abstände des Sitzmoduls zu den Sendemodulen ergeben sich in einer Ebene betrachtet zwei Schnittpunkte von Kreisen um die Sendemodule mit dem jeweiligen Abstand als Radius. Liegt ein Schnittpunkt außerhalb des vorbestimmten Bereichs, kann dieser Punkt sofort als Position des Sitzes ausgeschlossen bzw. darauf geschlossen werden, dass der innerhalb des Bereichs liegende Schnittpunkt der Position des Sitzes bzw. des Sitzmoduls entspricht.

Daraus ergibt sich für eine weitere vorteilhafte Variante des Sitzüberwachungssystems, dass die jeweilige vorbestimmte Position der Sendemodule relativ zu dem Bereich so gewählt ist, dass von zwei Schnittpunkten aller möglichen Kreise, deren Zentrum jeweils eines der Sendemodule ist, jeweils ein Schnittpunkt innerhalb des Bereichs und ein Schnittpunkt außerhalb des Bereichs liegt.

Bei einer besonders vorteilhaften Weiterbildung kann vorgesehen sein, dass das erste Sendemodul entlang einer ersten Achse und das zweite Sendemodul entlang einer zu der ersten Achse schrägen zweiten Achse angeordnet sind. Vorzugsweise sind die erste Achse und die zweite Achse orthogonal zueinander. Dabei können die Achsen beispielsweise den Bereich begrenzen oder außerhalb des Bereichs angeordnet sein.

Meist ist es notwendig, die Sitze mechanisch in dem Fahrzeug fixieren zu können, sodass diese lösbar aber über die Dauer der Fixierung, zumindest mit der dafür vorgesehenen Schnittstelle, ortsfest in dem Fahrzeug angeordnet sind. Eine vorteilhafte Weiterbildung sieht hierfür vor, dass der zumindest eine Sitz eine Sitzbasis zur lösbaren Fixierung des Sitzes in dem Fahrzeug als eine Schnittstelle zum Fahrzeug aufweist. Das Sitzmodul weist ferner eine vorbestimmte und relativ zur Sitzbasis ortsfeste Position auf, sodass das Sitzmodul eines in dem Bereich angeordneten Sitzes in einer vorbestimmten Ebene angeordnet ist. Ist dem Modul, welches die Positionsbestimmung durchführt, also dem Sitzmodul und/oder dem Steuermodul, diese relative Position des Sitzmoduls zur Sitzbasis bzw. die Ebene sowie die Positionen der Sendemodule bekannt, kann die Position des Sitzmoduls relativ zu den Sendemodulen genauer bestimmt werden, da eine eventuelle Differenz zwischen der Position der Sendemodule und der Position des Sitzmoduls entlang der Hochachse des Fahrzeugs berücksichtigt werden kann.

Weiter ist gemäß einer vorteilhaften Variante vorgesehen, dass der zumindest eine Sitz an einem mechanische Rastpunkte aufweisenden vorbestimmten Raster und/oder an zumindest einer an dem vorbestimmten Raster ausgerichteten Schiene in dem Bereich anordenbar bzw. lösbar fixierbar ist.

Dieses Raster und/oder gegebenenfalls der Verlauf der zumindest einen Schiene auf dem Raster kann bei einer Positionsbestimmung ebenfalls berücksichtigt werden, um dadurch die Position mit höherer Genauigkeit bestimmen und zugleich zusätzliche Informationen ermitteln zu können.

Vorzugsweise ist das zumindest eine Sitzmodul und/oder das Steuermodul ausgebildet, aus den Signalstärken der von den Antennen des Empfangsmoduls empfangenen Signale einen jeweiligen Abstand des zumindest einen Sitzmoduls zu den Sendemodulen und aus den Abständen die Position des Sitzmoduls im Fahrzeug zu bestimmen.

Ist das Raster bzw. sind die Positionen der Rastpunkte und/oder der Verlauf und die Positionierung der Schienen bekannt, kann ferner vorgesehen sein, dass das zumindest eine Sitzmodul und/oder das Steuermodul ausgebildet ist, aus den Signalstärken der von den Antennen des Empfangsmoduls empfangenen Signale einen jeweiligen Abstand des zumindest einen Sitzmoduls zu den Sendemodulen und aus den Abständen sowie aus dem vorbestimmten Raster die Position des Sitzmoduls und insbesondere eine Orientierung des dem Sitzmodul zugeordneten Sitzes im Fahrzeug zu bestimmen, wobei ferner zusätzliche Informationen aus einer Abweichung einer Position des Sitzmoduls von dem Raster bestimmt werden können.

Zum besseren Verständnis seien die folgenden Beispiele genannt:
Weicht die anhand der Signalstärken bestimmte Position geringfügig von einem Rastpunkt oder einem Verlauf einer Schiene ab, kann angenommen werden, dass der zugehörige Sitz an dem Rastpunkt oder auf der Schiene angeordnet ist.

Wird angenommen, dass die anhand der Signalstärke bestimmte Position hinreichend genau ist, kann aus einer Abweichung zu einem (nächstliegenden und mithin zugehörigen) Rastpunkt eine Drehung und/oder Orientierung des Sitzes um den Rastpunkt ermittelt werden.

Ist ein Sitzmodul genau einem Sitz zugeordnet und an dem Sitz so angeordnet, dass er immer auf einem Rastpunkt liegt, kann bei einer aus den Signalstärken ermittelten und auf einem Rastpunkt liegenden Position angenommen werden, dass das Sitzmodul genau einem Sitz zugeordnet ist. Ist davon abweichend beispielsweise ein weiteres Sitzmodul genau zwei Sitzen zugeordnet und an den beiden Sitzen so angeordnet, dass er immer um einen vorbekannten Versatz zu einem Rastpunkt versetzt ist, kann bei einer aus den Signalstärken ermittelten Position und dem sich daraus ergebenden Versatz zu dem nächstliegenden Rastpunkt angenommen werden, dass das Sitzmodul zwei Sitzen zugeordnet ist und ob die Sitze beispielsweise zur Fahrzeugfront oder zum Fahrzeugheck hin ausgerichtet sind. Dabei sind hierfür keine zusätzlichen Sensoren notwendig, da diese als Zustandswerte verstandenen Werte unmittelbar aus einer Abweichung der ermittelten Position zu dem Raster bestimmt werden können.

Weist kann vorgesehen sein, dass nur ein Teil der Sitze in dem Innenraum des Fahrzeugs anordenbar bzw. aus diesem entfernbar ausgebildet sind. Insbesondere der Fahrersitz kann fest in dem Innenraum montiert sein. Dabei kann jedoch auch der Fahrersitz innerhalb des Bereichs angeordnet sein und ein Sitzmodul aufweisen, sodass anhand der vorbekannten und festen Position des Fahrersitzes die Positionsbestimmung mit dem ihm zugeordneten Sitzmodul kalibriert werden kann.

Ein weiterer Aspekt der Erfindung betrifft ein Verfahren zur Bestimmung einer Position eines Sitzes in einem Innenraum eines Fahrzeugs mit einem erfindungsgemäßen Sitzüberwachungssystem. Dabei ist vorgesehen, dass aus den Signalstärken (RSSI) der von den genau zwei Antennen des Empfangsmoduls empfangenen Signalen ein erster Abstand des Sitzmoduls von dem ersten Sendemodul und ein zweiter Abstand des Sitzmoduls von dem zweiten Sendemodul berechnet wird. Anschließend werden aus dem ersten Abstand und dem zweiten Abstand mögliche, insbesondere in einer vorbestimmten Ebene liegende Positionen des Sitzmoduls bestimmt. Sind mehr als eine Position möglich, können nicht mögliche Positionen ausgeschlossen bzw. auf eine einzig korrekte Position geschlossen werden, in dem zusätzliche Informationen berücksichtigt werden. Als korrekte bzw. die einzig korrekte Position wird dabei eine Position innerhalb des Fahrzeugs verstanden. Eine Bestimmung der tatsächlichen Position ist durch Berücksichtigung eines vorbestimmten Bereichs, in welchem die Sitze anordenbar sind, möglich. Zusätzlich oder alternativ kann ein Raster, auf welchem die Sitze anordenbar sind, berücksichtigt werden. Weiter können zusätzlich oder alternativ eine vorbestimmte Senderichtung der Antennen der Sendemodule und/oder eine vorbestimmte Empfangsrichtung der Antennen des Empfangsmoduls berücksichtigt werden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Sitzüberwachungssystem bei einer ersten Sitzanordnung;
- Fig. 2: ein Sitzüberwachungssystem in vereinfachter Darstellung.

Die Figuren sind beispielhaft schematisch. Gleiche Bezugszeichen in den Figuren weisen auf gleiche funktionale und/oder strukturelle Merkmale hin.

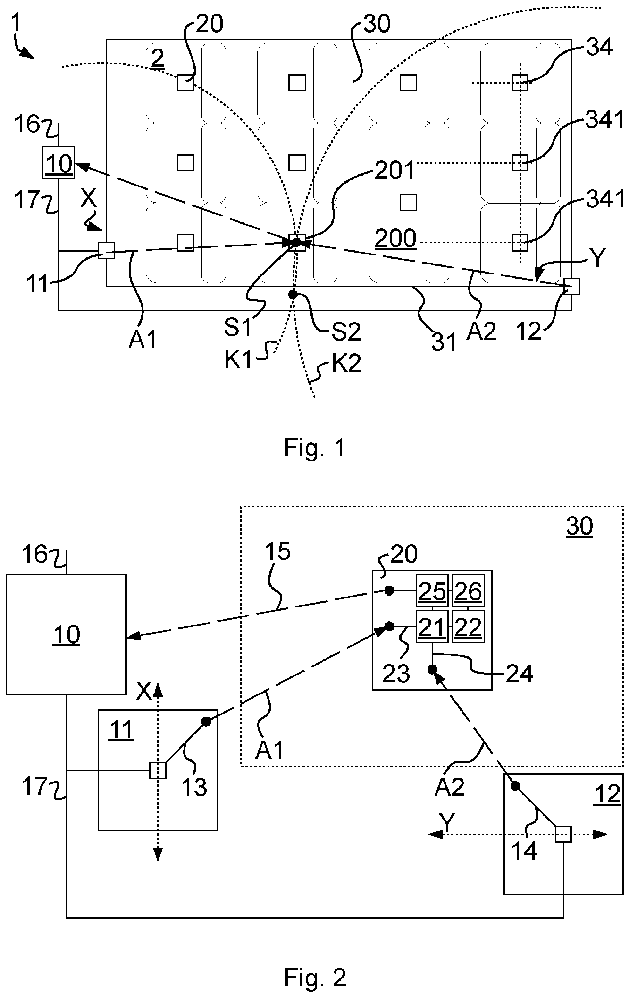

**In** den Figuren 1 und 2 ist jeweils ein Sitzüberwachungssystem 1 zur Überwachung eines Zustands zumindest eines in einem Innenraum und genauer in einem Bereich 30 im Innenraum eines Fahrzeug anordenbaren Sitzes 2 und Positionsbestimmung des Sitzes 2 in dem Innenraum bzw. in dem Bereich 30 dargestellt. Dabei entspricht Figur 1 einer Aufsicht auf ein mögliches Sitzüberwachungssystem 1 und Figur 2 einer weiter schematisierten Darstellung eines Sitzüberwachungssystems 1, bei welchem es sich auch um das Sitzüberwachungssystem 1 gemäß Figur 1 handeln kann.

Das Sitzüberwachungssystem 1 weist ein in das Fahrzeug integriertes Steuermodul 10 sowie genau zwei mit dem Steuermodul 10 beispielsweise über eine physische Leitung 17 signaltechnisch verbundene Sendemodule 11, 12 auf. Die Sendemodule 11, 12 sind gegenüber dem Bereich 30 ortsfest an einer vorbestimmten Position und vorliegend entlang jeweils einer den rechteckigen Bereich 30 begrenzenden und zueinander orthogonal angeordneten Achsen X, Y angeordnet.

Weiter verfügt das Sitzüberwachungssystem 1 über zumindest ein Sitzmodul 20, wobei die Anzahl der Sitzmodule 20 der Anzahl der in dem Fahrzeug angeordneten Sitze 2 bzw. der Anzahl von Sitzeinheiten 200 entspricht, welche aus mehreren Sitzen 2 gebildet sein können. Entsprechend ist jedes Sitzmodul 20 zumindest einem Sitz 2 zugeordnet. Wie in Figur 1 dargestellt ist ein Sitzmodul 20 einer Sitzeinheit bzw. Sitzgruppe 200 von zwei miteinander verbundenen Sitzen 2 zugeordnet.

Weiter verfügt jedes Sitzmodul 20 über ein Empfangsmodul 21, wie es in Figur 2 dargestellt ist. Die genau zwei Sendemodule 11, 12 sind beabstandet zueinander angeordnet und weisen jeweils genau eine in Figur 2 dargestellte Antenne 13, 14 auf.

Auch jedes Empfangsmodul 21 jedes Sitzmoduls 20 weist genau zwei Antennen 23, 24 auf, wobei eine erste Antenne 23 des Empfangsmoduls 21 ausgebildet ist, ein Signal von einem ersten Sendemodul 11 der genau zwei Sendemodule 11, 12 zu empfangen, und eine zweite Antenne 24 des Empfangsmoduls 21 ausgebildet ist, ein Signal von einem zweiten Sendemodul 12 der genau zwei Sendemodule 11, 12 zu empfangen.

Das Empfangsmodul 21 ist ausgebildet, Signalstärken der von den Antennen 23, 24 des Empfangsmoduls 21 empfangenen Signale zur Positionsbestimmung zu bestimmen.

Aus den Signalstärken (RSSI) kann entsprechend der Abstand A1, A2 des Empfangsmoduls 21 von den beiden Sendemodulen 11, 12 bestimmt werden. Da sich das Empfangsmodul 21 bzw. das Sitzmodul 20 nicht beliebig im Raum befinden kann, sondern sich immer in bestimmten Ebene angeordnet ist, welche beispielsweise parallel zum Fußboden des Fahrzeugs verläuft, kann aus den Abständen auf zwei mögliche Positionen des Sitzmoduls 20 relativ zu den Sendemodulen 11, 12 geschlossen werden.

Ein erster Abstand A1 entspricht dabei der Entfernung des Empfangsmoduls 21 von dem ersten Sendemodul 11 in der Ebene und ein zweiter Abstand A2 der Entfernung des Empfangsmoduls 21 von dem zweiten Sendemodul 12 in der Ebene.

Wird ein erster Kreis K1 mit einem Radius entsprechend dem Abstand A1 und seinem Zentrum in dem ersten Sendemodul 11 sowie ein zweiter Kreis K2 mit einem Radius entsprechend dem Abstand A2 und seinem Zentrum in den zweiten Sendemodul 12 angenommen ergibt sich bei dem Sonderfall, bei welchem die Abstände A1, A2 identisch sind, genau ein Schnittpunkt, welcher dann der Position des Sitzmoduls 20 entspricht. Sind die Abstände A1, A2 nicht identisch ergeben sich in der Ebene immer genau zwei Schnittpunkte S1, S2 der Kreise K1, K2, wobei beide Schnittpunkte S1, S2 die Position des Sitzmoduls 20 relativ zu den Sendemodulen 11, 12 sein können.

Durch die hier gewählte Anordnung der Sendemodule 11, 12 zu dem Bereich 30 liegt dabei jedoch einer der beiden Schnittpunkte S1, S2 innerhalb des Bereichs 30 und der andere Schnittpunkt außerhalb des Bereichs 30, sodass unmittelbar darauf geschlossen werden kann, dass der innerhalb des Bereichs 30 liegende Schnittpunkt der Position des Sitzmoduls 20 entspricht.

Von dieser Position des Sitzmoduls 20 kann durch eine entsprechende Umrechnung auf eine Position relativ zu einem beliebig wählbaren Koordinatensystem geschlossen werden.

Weiter kann eine solche Umrechnung durch ein Raster 34, auf dem die Sitze 2 anordenbar sind, ergänzt werden, um die Genauigkeit der Position zu erhöhen oder zusätzliche Informationen über den Sitz 2 zu erhalten.

Dabei ist davon auszugehen, dass die Sitze 2 bzw. die Sitzeinheiten mechanisch in dem Fahrzeug fixiert sind und hierfür ein Raster in dem Fahrzeug bereitgestellt ist, welches beispielsweise Rastpunkte oder Rastschienen aufweisen kann.

Ist die Position des Sitzmoduls 20 an einem Sitz 2 relativ zu einem Rastpunkt bzw. dem Raster 34, an welchem der Sitz 2 befestigt ist, bekannt, kann diese Abweichung bestimmt und hieraus weitere Informationen generiert werden.

Wie in Figur 1 gezeigt, ist bei der Sitzeinheit 200 vorgesehen, dass das Sitzmodul 20 entsprechend der Darstellung in vertikaler Richtung mittig in der Sitzeinheit 200 angeordnet ist. Die Position des Sitzmoduls 20 der Sitzeinheit 200 liegt entsprechend genau zwischen zwei horizontal verlaufenden Rastebenen 341 des Rasters 34 und nicht wie bei einzelnen Sitzen 2 genau auf einer horizontal verlaufenden Rastebene 341 des Rasters 34, sodass über die Position unmittelbar bestimmt werden kann, dass es sich nicht um ein Sitzmodul 20 eines einzelnen Sitzes 2, sondern um ein Sitzmodul 20 einer Sitzeinheit 200 handelt.

Die Bestimmung der Abstände A1, A2 und die Bestimmung der Position des Sitzmoduls 20 kann durch das Sitzmodul 20 selbst und beispielsweise durch eine entsprechende Recheneinheit 26 des Sitzmoduls 20 durchgeführt werden. Anschließend kann die so bestimmte Position über einen Rückkanal an das Steuermodul 10 gesendet werden. Der Rückkanal kann wie in Figur 2 dargestellt durch eine separate Funkverbindung 15 zur uni- oder bidirektionalen Datenübertragung erfolgen, wofür das Sitzmodul 20 beispielsweise eine HF-Antenne 25 aufweisen kann.

Alternativ können die Abstände A1, A2 oder lediglich die Signalstärken von dem Sitzmodul 20 an das Steuermodul 10 gesendet und vom Steuermodul die Position des Sitzmoduls 20 bestimmt werden.

Weiter kann das Steuermodul 10 über eine Schnittstelle 16 zur Datenübertragung an weitere Steuergeräte des Fahrzeugs aufweisen oder mit diesen über CAN-BUS verbunden sein.

## Patentansprüche

1. Sitzüberwachungssystem (1) zur Überwachung eines Zustands zumindest eines in einem Innenraum eines Fahrzeug anordenbaren Sitzes (2) und Positionsbestimmung des Sitzes (2) in dem Innenraum,
wobei das Sitzüberwachungssystem (1) ein Steuermodul (10), genau zwei mit dem Steuermodul (10) signaltechnisch verbundene Sendemodule (11, 12) sowie zumindest ein Sitzmodul (20) aufweist, welches zumindest einem Sitz (2) zugeordnet ist und welches ein Empfangsmodul (21) aufweist,
wobei
die genau zwei Sendemodule (11, 12) beabstandet zueinander angeordnet sind und jeweils genau eine Antenne (13, 14) aufweisen,
das Empfangsmodul (21) genau zwei Antennen (23, 24) aufweist, wobei eine erste Antenne (23) des Empfangsmoduls (21) ausgebildet ist, ein Signal von einem ersten Sendemodul (11) der genau zwei Sendemodule (11, 12) zu empfangen, und eine zweite Antenne (24) des Empfangsmoduls (21) ausgebildet ist, ein Signal von einem zweiten Sendemodul (12) der genau zwei Sendemodule (11, 12) zu empfangen,
wobei das Empfangsmodul (21) ausgebildet ist, Signalstärken der von den Antennen (23, 24) des Empfangsmoduls (21) empfangenen Signale zur Positionsbestimmung zu bestimmen.

2. Sitzüberwachungssystem nach Anspruch 1,
wobei das Empfangsmodul (21) signaltechnisch mit dem Steuermodul (10) verbunden und ausgebildet ist, Daten an das Steuermodul (10) zu senden, wobei das Empfangsmodul (21) insbesondere ausgebildet ist, eine digitale Information und weiter insbesondere die Information ob das Sitzmodul (20) im Innenraum angeordnet ist, an das Steuermodul (10) zu senden.

3. Sitzüberwachungssystem nach Anspruch 2,
wobei das Empfangsmodul (21) ausgebildet ist,
die Signalstärken der von den Antennen (23, 24) des Empfangsmoduls (21) empfangenen Signale zur Positionsbestimmung an das Steuermodul (10) zu übertragen
und/oder eine Position des Sitzes (2) im Innenraum an das Steuermodul (10) zu übertragen, welche durch das Sitzmodul (20) aus den Signalstärken der von den Antennen (23, 24) des Empfangsmoduls (20) empfangenen Signale bestimmbar ist,
und/oder ein Zustandswerte enthaltendes insbesondere digitales Signal an das Steuermodul (10) übertragen.

4. Sitzüberwachungssystem nach einem der vorhergehenden Ansprüche,
wobei das zumindest eine Sitzmodul (20) ein Sensormodul (22) aufweist, welches ausgebildet ist, Zustandswerte des zumindest einen Sitzes (2), welchem das Sitzmodul (20) zugeordnet ist, zu ermitteln.

5. Sitzüberwachungssystem nach einem der vorhergehenden Ansprüche,
wobei die Antennen (13, 14) der genau zwei Sendemodule (11, 12) und/oder die genau zwei Antennen (23, 24) des Empfangsmoduls (21) unidirektionale Antennen und/oder eindimensional sendende und/oder empfangende Antennen sind.

6. Sitzüberwachungssystem nach einem der vorhergehenden Ansprüche,
wobei der zumindest eine Sitz (2) in einem vorbestimmten und insbesondere rechteckigen Bereich (30) in dem Innenraum des Fahrzeugs anordenbar und die jeweilige Position der genau zwei Sendemodule (11, 12) relativ zu dem Bereich (30) bekannt und unveränderlich ist.

7. Sitzüberwachungssystem nach dem vorhergehenden Anspruch,
wobei die jeweilige vorbestimmte Position der Sendemodule (11, 12) so gewählt ist, dass von zwei Schnittpunkten (S1, S2) aller möglichen Kreise (K1, K2), deren Zentrum jeweils eines der Sendemodule (11, 12) ist, jeweils ein erster Schnittpunkt (S1) innerhalb des Bereichs (30) und ein zweiter Schnittpunkt (S2) außerhalb des Bereichs (30) liegt.

8. Sitzüberwachungssystem nach dem vorhergehenden Anspruch,
wobei das erste Sendemodul (11) entlang einer ersten Achse (X) und das zweite Sendemodul (12) entlang einer zu der ersten Achse (X) schrägen zweiten Achse (Y) angeordnet sind, wobei die erste Achse (X) und die zweite Achse (Y) insbesondere orthogonal zueinander sind.

9. Sitzüberwachungssystem nach einem der vorhergehenden Ansprüche 6 bis 8,
wobei der zumindest eine Sitz (2) eine Sitzbasis zur lösbaren Fixierung des Sitzes (2) in dem Fahrzeug aufweist,
wobei das Sitzmodul (20) eine vorbestimmte und relativ zur Sitzbasis ortsfeste Position aufweist, sodass das Sitzmodul (20) eines in dem Bereich (30) angeordneten Sitzes in einer vorbestimmten Ebene angeordnet ist.

10. Sitzüberwachungssystem nach einem der Ansprüche 6 bis 9,
wobei der zumindest eine Sitz (2) an einem mechanische Rastpunkte aufweisenden vorbestimmten Raster (34) und/oder an zumindest einer an dem vorbestimmten Raster (34) ausgerichteten Schiene in dem Bereich (30) anordenbar ist.

11. Sitzüberwachungssystem nach einem der vorhergehenden Ansprüche,
wobei das zumindest eine Sitzmodul (20) und/oder das Steuermodul (10) ausgebildet sind/ist, aus den Signalstärken der von den Antennen (23, 24) des Empfangsmoduls (21) empfangenen Signale einen jeweiligen Abstand (A1, A2) des zumindest einen Sitzmoduls (20) zu den Sendemodulen (11, 12) und aus den Abständen (A1, A2) die Position des Sitzmoduls (20) im Fahrzeug zu bestimmen.

12. Sitzüberwachungssystem nach den beiden vorhergehenden Ansprüchen,
wobei das zumindest eine Sitzmodul (20) und/oder das Steuermodul (10) ausgebildet ist, aus den Signalstärken der von den Antennen (23, 24) des Empfangsmoduls (21) empfangenen Signale einen jeweiligen Abstand (A1, A2) des zumindest einen Sitzmoduls (20) zu den Sendemodulen (11, 12) und aus den Abständen (A1, A2) sowie aus dem vorbestimmten Raster (34) die Position des Sitzmoduls (20) und insbesondere eine Orientierung des dem Sitzmodul (20) zugeordneten Sitzes (2) im Fahrzeug zu bestimmen.

13. Verfahren zur Bestimmung einer Position eines Sitzes (2) in einem Innenraum eines Fahrzeugs mit einem Sitzüberwachungssystem (1) nach einem der vorhergehenden Ansprüche,
wobei aus den Signalstärken der von den genau zwei Antennen (23, 24) des Empfangsmoduls (21) empfangenen Signalen ein erster Abstand (A1) des Sitzmoduls (20) von dem ersten Sendemodul (11) und ein zweiter Abstand (A2) des Sitzmoduls (20) von dem zweiten Sendemodul (12) berechnet wird,
wobei aus dem ersten Abstand (A1) und dem zweiten Abstand (A2) mögliche, insbesondere in einer vorbestimmten Ebene liegende Positionen des Sitzmoduls (20) bestimmt werden
und wobei durch einen vorbestimmten Bereich (30), in welchem die Sitze (2) anordenbar sind,
und/oder durch ein Raster (34), auf welchem die Sitze (2) anordenbar sind,
und/oder durch eine vorbestimmte Senderichtung der Antennen (13, 14) der Sendemodule
und/oder durch eine vorbestimmte Empfangsrichtung der Antennen (23, 24) des Empfangsmoduls (21) aus den möglichen Positionen eine tatsächliche Position des Sitzmoduls (20) bestimmt wird.

## Claims

1. A seat monitoring system (1) for monitoring a state of at least one seat (2) that can be arranged in an interior of a vehicle and determining the position of the seat (2) in the interior,
wherein the seat monitoring system (1) comprises a control module (10), exactly two transmission modules (11, 12) which are signal-connected to the control module (10), and at least one seat module (20) which is associated with at least one seat (2) and which has a reception module (21),
wherein
the exactly two transmission modules (11, 12) are arranged at a distance from one another and each have exactly one antenna (13, 14),
the reception module (21) has exactly two antennas (23, 24), a first antenna (23) of the reception module (21) being designed to receive a signal from a first transmission module (11) of the exactly two transmission modules (11, 12), and a second antenna (24) of the reception module (21) being designed to receive a signal from a second transmission module (12) of the exactly two transmission modules (11, 12),
wherein the reception module (21) is designed to determine signal strengths of the signals received by the antennas (23, 24) of the reception module (21) for position determination.

2. The seat monitoring system according to claim 1,
wherein the reception module (21) is signal-connected to the control module (10) and is designed to transmit data to the control module (10), the reception module (21) being designed in particular to transmit digital information and, particularly in addition, information about whether the seat module (20) is arranged in the interior to the control module (10).

3. The seat monitoring system according to claim 2,
wherein the reception module (21) is designed
to transmit the signal strengths of the signals received by the antennas (23, 24) of the reception module (21) to the control module (10) for position determination
and/or to transmit a position of the seat (2) in the interior to the control module (10), which position can be determined by the seat module (20) from the signal strengths of the signals received by the antennas (23, 24) of the reception module (20),
and/or to transmit a particularly digital signal containing state values to the control module (10).

4. The seat monitoring system according to any one of the preceding claims,
wherein the at least one seat module (20) has a sensor module (22) which is designed to determine state values of the at least one seat (2) with which the seat module (20) is associated.

5. The seat monitoring system according to any one of the preceding claims,
wherein the antennas (13, 14) of the exactly two transmission modules (11, 12) and/or the exactly two antennas (23, 24) of the reception module (21) are unidirectional antennas and/or one-dimensionally transmitting and/or receiving antennas.

6. The seat monitoring system according to any one of the preceding claims,
wherein the at least one seat (2) can be arranged in a predetermined and, in particular, rectangular area (30) in the interior of the vehicle, and the respective position of the exactly two transmission modules (11, 12) relative to the area (30) is known and unchangeable.

7. The seat monitoring system according to the preceding claim,
wherein the respective predetermined position of the transmission modules (11, 12) is selected such that, of two intersection points (S1, S2) of all possible circles (K1, K2) whose center is one of the respective transmission modules (11, 12), a first intersection point (S1) lies within the area (30) and a second intersection point (S2) lies outside the area (30).

8. The seat monitoring system according to the preceding claim,
wherein the first transmission module (11) is arranged along a first axis (X) and the second transmission module (12) is arranged along a second axis (Y) oblique to the first axis (X), the first axis (X) and the second axis (Y) being in particular orthogonal to one another.

9. The seat monitoring system according to any one of preceding claims 6 to 8,
wherein the at least one seat (2) has a seat base for releasably fixing the seat (2) in the vehicle,
the seat module (20) having a predetermined and fixed position relative to the seat base, so that the seat module (20) of a seat that is arranged in the region (30) is arranged in a predetermined plane.

10. The seat monitoring system according to any one of claims 6 to 9,
wherein the at least one seat (2) can be arranged on a predetermined grid (34) having mechanical locking points and/or on at least one rail that is aligned with the predetermined grid (34) in the area (30).

11. The seat monitoring system according to any one of the preceding claims,
wherein the at least one seat module (20) and/or the control module (10) are/is designed to determine a respective distance (A1, A2) of the at least one seat module (20) to the transmission modules (11, 12) from the signal strengths of the signals received by the antennas (23, 24) of the reception module (21) and to determine the position of the seat module (20) in the vehicle from the distances (A1, A2).

12. The seat monitoring system according to the two preceding claims,
wherein the at least one seat module (20) and/or the control module (10) is designed to determine a respective distance (A1, A2) of the at least one seat module (20) to the transmission modules (11, 12) from the signal strengths of the signals received by the antennas (23, 24) of the reception module (21) and to determine the position of the seat module (20) and in particular an orientation of the seat (2) associated with the seat module (20) in the vehicle from the distances (A1, A2) and from the predetermined grid (34).

13. A method for determining a position of a seat (2) in an interior of a vehicle with a seat monitoring system (1) according to any one of the preceding claims,
wherein a first distance (A1) of the seat module (20) from the first transmission module (11) and a second distance (A2) of the seat module (20) from the second transmission module (12) is calculated from the signal strengths of the signals received by exactly two antennas (23, 24) of the reception module (21),
wherein possible positions of the seat module (20) lying particularly in a predetermined plane are determined from the first distance (A1) and the second distance (A2),
and wherein an actual position of the seat module (20) is determined from the possible positions through a predetermined area (30) in which the seats (2) can be arranged
and/or through a grid (34) on which the seats (2) can be arranged
and/or through a predetermined transmission direction of the antennas (13, 14) of the transmission modules
and/or through a predetermined reception direction of the antennas (23, 24) of the reception module (21).

## Revendications

1. Système de surveillance de siège (1) permettant de surveiller l'état d'au moins un siège (2) pouvant être agencé à l'intérieur d'un véhicule et de déterminer la position du siège (2) à l'intérieur,
dans lequel le système de surveillance de siège (1) comprend un module de commande (10), exactement deux modules d'émission (11, 12) connectés au module de commande (10) pour l'émission de signal, et au moins un module de siège (20) qui est affecté à au moins un siège (2) et qui comporte un module de réception (21),
dans lequel
les exactement deux modules d'émission (11, 12) sont agencés à distance l'un de l'autre et comportent chacun exactement une antenne (13, 14),
le module de réception (21) comporte exactement deux antennes (23, 24), une première antenne (23) du module de réception (21) étant conçue pour recevoir un signal d'un premier module d'émission (11) des exactement deux modules d'émission (11, 12), et une deuxième antenne (24) du module de réception (21) étant conçue pour recevoir un signal d'un deuxième module d'émission (12) des exactement deux modules d'émission (11, 12),
dans lequel le module de réception (21) est conçu pour déterminer les intensités de signal des signaux reçus par les antennes (23, 24) du module de réception (21) pour la détermination de la position.

2. Système de surveillance de siège selon la revendication 1,
dans lequel le module de réception (21) est connecté au module de commande (10) en termes de technologie de signal et est conçu pour envoyer des données au module de commande (10), le module de réception (21) étant conçu en particulier pour envoyer des informations numériques et en outre en particulier les informations indiquant si le module de siège (20) est agencé à l'intérieur au module de commande (10).

3. Système de surveillance de siège selon la revendication 2,
dans lequel le module de réception (21) est configuré pour
transmettre les intensités des signaux reçus par les antennes (23, 24) du module de réception (21) au module de commande (10) pour la détermination de la position
et/ou transmettre au module de commande (10) une position du siège (2) à l'intérieur, laquelle position peut être déterminée par le module de siège (20) à partir des intensités des signaux reçus par les antennes (23, 24) du module de réception (20),
et/ou transmettre un signal contenant des valeurs d'état, notamment un signal numérique, au module de commande (10).

4. Système de surveillance de siège selon l'une quelconque des revendications précédentes,
dans lequel l'au moins un module de siège (20) comporte un module de capteur (22) qui est conçu pour déterminer les valeurs d'état de l'au moins un siège (2) auquel le module de siège (20) est affecté.

5. Système de surveillance de siège selon l'une quelconque des revendications précédentes,
dans lequel les antennes (13, 14) des deux modules d'émission (11, 12) et/ou les deux antennes (23, 24) du module de réception (21) sont des antennes unidirectionnelles et/ou des antennes d'émission et/ou de réception unidimensionnelles.

6. Système de surveillance de siège selon l'une quelconque des revendications précédentes,
dans lequel l'au moins un siège (2) peut être agencé dans une zone prédéterminée et en particulier rectangulaire (30) à l'intérieur du véhicule et la position respective des deux modules de transmission (11, 12) par rapport à la zone (30) est connue et immuable.

7. Système de surveillance de siège selon la revendication précédente,
dans lequel la position prédéterminée respective des modules d'émission (11, 12) est sélectionnée de telle sorte que parmi deux points d'intersection (S1, S2) de tous les cercles possibles (K1, K2), dont le centre est dans chaque cas l'un des modules d'émission (11, 12), un premier point d'intersection (S1) se trouve à l'intérieur de la zone (30) et un deuxième point d'intersection (S2) se trouve à l'extérieur de la zone (30).

8. Système de surveillance de siège selon la revendication précédente,
dans lequel le premier module de transmission (11) est agencé le long d'un premier axe (X) et le deuxième module de transmission (12) est agencé le long d'un deuxième axe (Y) oblique par rapport au premier axe (X), le premier axe (X) et le deuxième axe (Y) étant en particulier orthogonaux l'un à l'autre.

9. Système de surveillance de siège selon l'une quelconque des revendications précédentes 6 à 8,
dans lequel l'au moins un siège (2) a une base de siège pour fixer de manière amovible le siège (2) dans le véhicule,
dans lequel le module de siège (20) a une position prédéterminée et fixe par rapport à la base du siège, de sorte que le module de siège (20) d'un siège agencé dans la région (30) est agencé dans un plan prédéterminé.

10. Système de surveillance de siège selon l'une quelconque des revendications 6 à 9,
dans lequel l'au moins un siège (2) peut être agencé sur une grille prédéterminée (34) comportant des points de verrouillage mécaniques et/ou sur au moins un rail aligné avec la grille prédéterminée (34) dans la zone (30) .

11. Système de surveillance de siège selon l'une quelconque des revendications précédentes,
dans lequel l'au moins un module de siège (20) et/ou le module de commande (10) sont configurés pour déterminer une distance respective (A1, A2) de l'au moins un module de siège (20) par rapport aux modules d'émission (11, 12) à partir des intensités de signal des signaux reçus par les antennes (23, 24) du module de réception (21) et pour déterminer la position du module de siège (20) dans le véhicule à partir des distances (A1, A2).

12. Système de surveillance de siège selon les deux revendications précédentes, dans lequel l'au moins un module de siège (20) et/ou le module de commande (10) sont configurés pour déterminer une distance respective (A1, A2) de l'au moins un module de siège (20) par rapport aux modules d'émission (11, 12) à partir des intensités de signal des signaux reçus par les antennes (23, 24) du module de réception (21), et pour déterminer la position du module de siège (20) et en particulier une orientation du siège (2) associé au module de siège (20) dans le véhicule à partir des distances (A1, A2) et de la grille prédéterminée (34).

13. Procédé de détermination de la position d'un siège (2) à l'intérieur d'un véhicule avec un système de surveillance de siège (1) selon l'une quelconque des revendications précédentes,
dans lequel une première distance (A1) du module de siège (20) par rapport au premier module de transmission (11) et une deuxième distance (A2) du module de siège (20) par rapport au deuxième module de transmission (12) sont calculées à partir des intensités de signal des signaux reçus par les deux antennes (23, 24) du module de réception (21),
dans lequel des positions possibles du module de siège (20), en particulier situées dans un plan prédéterminé, sont déterminées à partir de la première distance (A1) et de la deuxième distance (A2),
et dans lequel au moyen d'une zone prédéterminée (30) dans laquelle les sièges (2) peuvent être agencés,
et/ou au moyen d'une grille (34) sur laquelle les sièges (2) peuvent être agencés,
et/ou au moyen d'une direction d'émission prédéterminée des antennes (13, 14) des modules d'émission,
et/ou au moyen d'une direction de réception prédéterminée des antennes (23, 24) du module de réception (21), une position réelle du module de siège (20) est déterminée à partir des positions possibles.
